# EUROPEAN PATENT SPECIFICATION

(11) **EP 3 517 385 B1**
(45) Date of publication and mention of the grant of the patent: **31.08.2022**
(21) Application number: 18153660.8
(22) Date of filing: 26.01.2018
(51) Int. Cl.: B60W 50/14, B60W 50/10, B60W 30/18, B60W 40/08

(54) **METHOD AND DRIVER ASSISTANCE SYSTEM FOR ASSISTING A DRIVER IN DRIVING A VEHICLE**
VERFAHREN UND FAHRERASSISTENZSYSTEM ZUR UNTERSTÜTZUNG EINES FAHRERS BEIM FAHREN EINES FAHRZEUGS
PROCÉDÉ ET SYSTÈME D'ASSISTANCE AU CONDUCTEUR DESTINÉ À UN CONDUCTEUR LORS DE LA CONDUITE D'UN VÉHICULE

(43) Date of publication of application: 31.07.2019
(73) Proprietor: Honda Research Institute Europe GmbH, 63073 Offenbach/Main (DE)
(72) Inventor: Heckmann, Dr., Martin, 63073 Offenbach/Main (DE)
(74) Representative: Beder, Jens

(56) References cited:
- EP-A1- 1 484 014
- EP-A1- 3 070 700
- DE-A1-102015 209 853
- JP-A- 2012 234 409
- US-A1- 2009 243 880
- US-A1- 2011 148 613
- US-A1- 2012 271 484

## Description

The invention relates to a method and a driver assistance system for assisting a driver in driving a vehicle and a vehicle having mounted such system thereon.

During the last years driver assistance systems have been rapidly developed in order to increase the comfort for a driver and the safety of driving. This is in particular important, because the traffic density increased over the years and thus the occasions when a driver encounters highly complex traffic situations also increased substantially. In such situations, it is advantageous if the driver is assisted by a driver assistance system such that the task of perceiving the traffic situation does not lie with the driver only.

Such driver assistance systems are capable of sensing the environment around a vehicle. In order to do so the vehicles are equipped with sensors like radar and/or lidar sensors and/or with image processing systems that include a camera. Such systems are capable of recognizing objects in the environment of the vehicle. In some cases the systems are mounted on the vehicle in a distributed fashion so that a 360° surveillance around the vehicle is possible. Of course, such a 360° surveillance exceeds any attention a human driver may pay but still the final decision on the driving behavior must lie with the driver, because the assistance system is not able to monitor the traffic in a monitored region with 100% accuracy.

Based on the perceived information a driver assistance system performs an evaluation of the traffic scene and based on a fixed scheme gives warnings or notifications to the driver. Since the driver assistance systems become more and more advanced, vast information has to be presented to the driver, in particular when a close cooperation between the driver and the system is necessary. This is, for example, the case when a semi-autonomous driving shall be made where driver and assistance system together solve challenges of the driving task.

In current systems the driver always has to be the last instance and information is provided, for example, by presenting an icon so that the driver easily can recognize the reason for the presented warning. Due to improved situation models, prediction models and evaluation of a sensed traffic scene in general, the amount of information that is presented to the driver also increases. Thus, the presentation of the results of an analysis of the traffic situation may lead to an unwanted distraction of the driver because he is demanded to check what kind of notification or warning is presented, then he has to decide if this warning or notification is relevant for his intended further driving behavior and act accordingly. Thus, contrary to the original intention the driver may be disturbed by the driver assistance system and his concentration is negatively affected. In some cases this could motivate the driver to rely on the system's evaluation without performing a sufficient assessment of the situation by himself.

On the other hand, in order to reduce the negative effect for the driver modern systems use head-up displays, which often use some form of augmented reality. Nevertheless, the presented objects may have been recognized by the driver already. Thus, the driver receives an additional warning or information which is unnecessary and consequently obtrusive and redundant. This might lead to a low acceptance of such systems and finally the driver may deactivate these systems.

A first approach to adapt the system to the needs of a driver was described in EP 2 949 536 A1. It suggests to observe the environment of a vehicle permanently, but not to present all the information on traffic situations that can be analyzed from the observed environment to the driver. Information that is given to the driver is limited to such aspects that are mentioned by the driver and thus, are formulated in an instruction to the system. The instruction is given as a spoken instruction and from the spoken instruction, the system concludes what aspects of a traffic scene have to be evaluated. In response, only the respective information is then provided to the driver.

Of course, this approach reduces the amount of information that is presented to a driver in order not to disturb his concentration. But on the other side, information that is provided to the driver has to be taken into account in an even wider context. In the situation of an intended turning maneuver of the ego-vehicle, for example, the driver might instruct the system to observe a road coming from the right at an intersection. As a result and in response to this instruction, he will receive information about a gap between cars arriving at the intersection from the right. Then, the system might output the information "there is a gap right now" . This might motivate the driver to immediately start his turning maneuver. But there might still be traffic and vehicles arriving from the left side that prohibit the turning maneuver if a collision shall be avoided.

An improvement is offered by the method described in EP 3 235 701 A1. But evaluation of information on the environment of the vehicle that was obtained is performed not only limited to the evaluation task being a definition of a requested assistance of the driver. The generation and output of information in response to the driver's request or instruction takes even more into consideration. This means that the advanced driver assistance system also evaluates an observed traffic scene with respect to other aspects of the traffic scene. An example could be a request from the driver to be informed on traffic approaching from the right side only for a turning maneuver to the left at an intersection. The described system nevertheless will additionally evaluate the left side of the road of the ego-vehicle (other aspect) in order to determine if a gap in the traffic approaching from the right may safely be used by the ego-vehicle or if approaching traffic from the left forbids such maneuver before recommending to execute the turning maneuver.

Although this approach already significantly improves safety, because it informs the driver only positively that a turning maneuver can be performed when, according to the system's evaluation, all conditions for a safe maneuver are met, there is still the problem of drivers over relying on the system's judgement.

A method for assisting a driver in driving a vehicle, in which all features of the preamble of claim 1 are disclosed, is described in EP 3 070 700 A1.

Further, there is known from US 2011/148613 A1 a device for approving automatic guidance of a vehicle, with which automatic guidance is only approved if the travel direction of the vehicle during the automatic guidance is in the field of vision of the driver.

It is an object of the invention to provide a method for assisting a driver in driving a vehicle, a driver assistance system and a vehicle that force the driver to make his own decision based on his own perception of every relevant aspect of the traffic scene before finally a driving action is performed by the driver.

This object is achieved by a method for assisting a driver in driving a vehicle, a driver assistance system and a vehicle according to the enclosed independent claims. Advantageous features of the present invention are defined in the corresponding subclaims.

According to the invention, the method for assisting a driver in driving a vehicle comprises a first step of determining which part of a traffic scene is perceived by the driver. Furthermore information on an environment of the vehicle is obtained. Then it is also determined a future trajectory based on an intention of a driver. This means that an estimation is made which driving route the vehicle will take based on an analysis of the driver intention. Such analysis can be a simple estimation that a driver wants to cross an intersection, turn to the left or turn to the right, when it is determined that the vehicle approaches an intersection and considering turning lights. The approach may be determined based on a position information of the vehicle on a map. Thus, the information on an environment of the vehicle may also be, for example, position information, but preferably comes from environment sensing. The method might be applied while the driver is approaching the relevant area or while he has stopped and is preparing to enter it.

Furthermore, an area of the environment of the vehicle that is relevant for judging if the future trajectory can be used safely is determined. This relates in particular to a gap in the traffic on lanes of an intersection that are to be used when the vehicle follows the future trajectory. Finally, a signal is generated and output taking into consideration if the driver perceived the traffic in the relevant area already. Based on this signal a warning may be output to the driver or the driver may be prevented from accessing the determined area of the road which means that, for example, the vehicle cannot enter the intersection. The output of the warning and preventing access to the determined area of the road may also be combined. This signal is upheld until the part of the traffic scene that is perceived by the driver can be determined to cover the traffic in the relevant area. Thus, it is ensured that the driver of the vehicle is aware of the traffic situation in a region of the environment or an area of the environment that is necessary to be perceived in order to correctly judge the traffic situation.

The invention also regards a driver assistance system in a vehicle that comprises sensors for observing a driver on the one side and for obtaining information on an environment of the vehicle on the other side. The sensor outputs are then processed by a processor which is configured to perform the method according to the invention.

With the present invention it can be avoided that the driver of the vehicle fully relies on the judgement of the system without himself observing and perceiving the traffic scene to an extent which allows to reasonably judge whether, for example, entering an intersection can be safely performed. On the one side this can be achieved by outputting a warning to the driver based on the generated and output signal or, in a more intrusive way, by for example, activating brakes of the vehicle so that further driving is inhibited.

Further, with the present invention, the relevant area is determined based on an attention delegation task defining an aspect of the traffic scene to be observed by sensors of the vehicle's driver assistance system. Based on such attention delegation task, the obtained environment information is evaluated and information on a result of such evaluation is output. This has the advantage that the determination of the relevant area even takes into consideration that a driver probably already defined an area of the environment of the vehicle for which he wants the system to observe. Thus, before the signal is reset and thus no warning is output or brakes are released, the driver will have to pay attention to a region or an area of the environment (relevant area) for which he delegated the observation of the traffic scene to the system. Thus, as long as the system does not output an information to the driver that there is, for example, a gap on the right side which could be used for performing the turning left movement, the driver can continuously pay attention, for example, to the left side of the vehicle. Nevertheless, in case that the system based on the evaluation result due to the delegated attention task invites the driver to start performing, for example, the turning movement to the left, the driver will have to pay attention to the right side as well for which he delegated the observation. Only after it is determined that the driver in fact perceived the relevant area, which is the lane on the right side of the vehicle in the example, the brakes will be released by setting back the signal only when perception of the relevant region can be determined.

Advantageous aspects of the method and system are defined in the sub-claims.

It is in particular advantageous to determine a driver's intention to cross an intersection or one or a plurality of lanes. When approaching an intersection it is, for example, easily possible to determine which direction a vehicle will drive further on by exploiting, for example, information from turning lights that are switched on by a driver. If no turning lights are switched on, it is assumed that the vehicle driver intends to go straight. If turning lights to the left are switched on, it is assumed that the driver intends to turn to the left. And, if turning lights to the right are switched on, it is assumed that the vehicle will turn to the right. Thus, even without the system itself analyzing the traffic scene based on environment sensing, it is possible to define areas of the road for which it is has to be determined if the driver sufficiently perceived the traffic scene of this area.

According to another advantageous aspect, the signal, which is generated and output, causes the brakes of the vehicle to be activated when the vehicle stops at an intersection. Furthermore, the signal (or resetting the signal) causes the brakes to be released after the driver perceived the traffic scene in the relevant area. As mentioned previously, this is an easy way to prevent the driver from performing a risky driving without sufficiently perceiving the traffic and the environment of the vehicle. Activating the brakes and releasing the brakes only after the driver in fact perceived the relevant area and thus was able to fully assess the traffic scene has the advantage that it is not necessary that the driver actively reacts to, for example, a warning which is output by the system. But even if only a warning is output, in most cases this is sufficient to remind the driver of being careful and observe a relevant area where he did not yet pay sufficient attention.

According to another aspect the brakes are released in case that the driver perceived the relevant area only for a predetermined duration and this duration is adapted so as to allow perception of the relevant part of the traffic scene, take a decision and start the intended movement. After that the brakes could be locked again. The duration of releasing the brakes must be sufficiently long that the driver in fact can perceive the relevant area of the environment, take his decision and start driving again. In this regard, it is in particular advantageous if the timing of releasing the brakes takes into consideration the completion of the decision taken by the driver. In order to estimate the point in time when such decision is taken, it is advantageously predicted when the observation or perception of the relevant region is completed. For doing so, it is in particular distinguished between perception of a part of the traffic scene in the relevant area and only glancing at the relevant area without perceiving it. This distinction is performed based on an analysis of the driver's eye glance and/or the driver's head motion and/or any partial movement of the two. For example, if the driver only looks into the direction of the relevant area for a very short time and there are a plurality of other traffic objects it can be assumed that he did not sufficiently perceive these traffic objects to correctly judge the traffic situations. On the other hand, if, for example, based on a signal from an eye tracker it can be determined that the driver well focused on all the traffic objects in the relevant area and thus well perceived the part of the traffic scene in the relevant area, the decision taken by the driver is assumed to be well founded.

According to another advantageous embodiment the brakes are activated only in case that the output information comprises a confirmation that the driver can safely execute his intended driving maneuver. This has the advantage that as long as the system does not indicate that there is a sufficiently large gap, for example, for turning to the left, the brakes are still released. The driver consequently can slowly drive forward to the intersection, for example, in order to correct his position for improved visibility.

The invention will now be described in more detail which respect to the annexed drawings in which
Fig. 1 shows an exemplary traffic situation for describing the functioning of the invention;
Fig. 2 shows a schematic of the layout of the system including the individual units that cooperate for performing the inventive method; and
Fig. 3 shows a simplified flowchart of the inventive method.

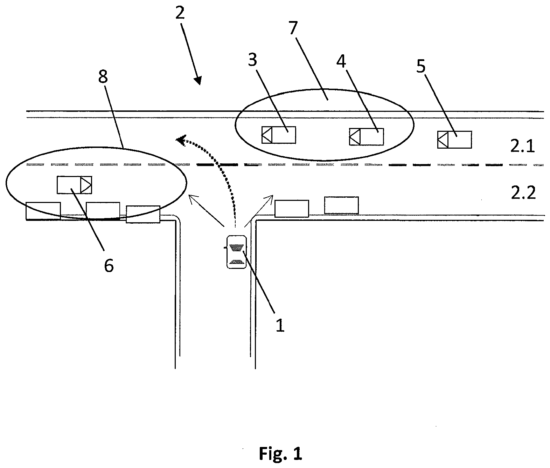

In Fig. 1 there is shown an example where a vehicle 1 approaches an intersection 2. In the situation used as an example the vehicle driver intends to turn to the left as it is indicated by the dotted arrow describing a future trajectory of the vehicle. The road that is to be entered by the vehicle 1 has two lanes 2.1 and 2.2. The example is illustrated for right-hand driving but it is evident that an adaptation to left-hand driving may easily be performed.

In the situation illustrated in Fig. 1, the vehicle 1 has first to cross the lane 2.2 and thereafter enter the lane 2.1. Thus, there are two areas 7 and 8 which need to be observed and depending on the traffic situation in these areas 7, 8, the driver has to decide whether he can safely follow the trajectory or not. Of course, the lane 2.1 that is to be entered by the vehicle 1 must provide a sufficient gap such that the vehicle 1 can enter the lane 2.1. In the present case it is illustrated that three vehicles are approaching from the right, namely vehicles 3, 4, 5. The distance to vehicle 5 may be large enough so that vehicle 1 might be able to enter the lane 2.1 but vehicles 3 and 4 are already close to the intersection area and thus safely performing the left turning maneuver for vehicle 1 seems to be impossible. Vehicles 3 and 4 are within an area 7 which needs to be observed by the vehicle driver in order to make a judgement whether safely following the trajectory is possible or not.

On the other side of course, a lane or even a plurality of lanes that is crossed when the vehicle 1 follows the trajectory also have to be observed by the vehicle driver. In the illustrated situation a further vehicle 6 is approaching from the left side on lane 2.2 and in case that it does not have to give right of way to vehicle 1 it may also cause vehicle 1 to wait. Thus, there is a second area 8 which also needs to be observed by the vehicle driver.

As it has been mentioned above there are systems in the market that assist the driver in evaluating the environment of the vehicle 1. Such as system may be instructed by a spoken instruction from the driver to observe the area 7. Such expression that is uttered by the vehicle driver could be "watch right". Typically the driver will initiate the assistance system of the vehicle either while approaching an intersection or while already standing there. The system will then watch the area specified in the spoken instruction, in the example given the area 7. Depending on the traffic situation and the entire traffic scene the system may then give feedback. Such feedback could be outputting information like "vehicles from the right" which would be a typical answer in the illustrated situation. In case that the area 7 does not show any traffic object or that only one vehicle can be determined there and after that there is a sufficient gap for entering the lane 2.1, the system would, for example, output "I do not see any vehicles from the right" or "gap after next vehicle". Since the driver instructed the system to observe the right side of the intersection, he can himself focus on the other area 8.

According to the invention the driver's traffic observation or perception is monitored by the system that is mounted in the vehicle 1. The system will thus recognize that the driver's focus is on the left side of the intersection 2 and that he will consequently not be able to judge by himself if in the area 7 there is a sufficient gap for entering the lane 2.1. Thus, the system will identify the area 7 as being a relevant area. A relevant area is an area which needs to be observed by the driver of a vehicle in order to correctly asses the traffic situation and to make a decision whether following his intended trajectory is safely possible or not but which has not yet been observed by the driver.

In a case where the driver delegates observation of a specific area to the system, the relevant area could be defined as being the area for which the system takes over observation of the traffic and evaluation thereof. But the present invention may also be realized without such a system that executes delegated evaluation tasks. In such a case the system may, for example, obtain information on the environment not on the basis of an instruction to take over evaluation of a specific area of the environment of the vehicle, but on the basis of map information and, for example, a GPS system. For example, a GPS mounted on the vehicle 1 determines a current position of vehicle 1 and thus the processor has knowledge that vehicle 1 is currently approaching intersection 2. Based on this information areas can be defined that are typical for intersections and which need to be observed and judged by the vehicle driver. For an intersection that has a layout as the intersection 2 of the example, prototypical areas would be areas 7 and 8.

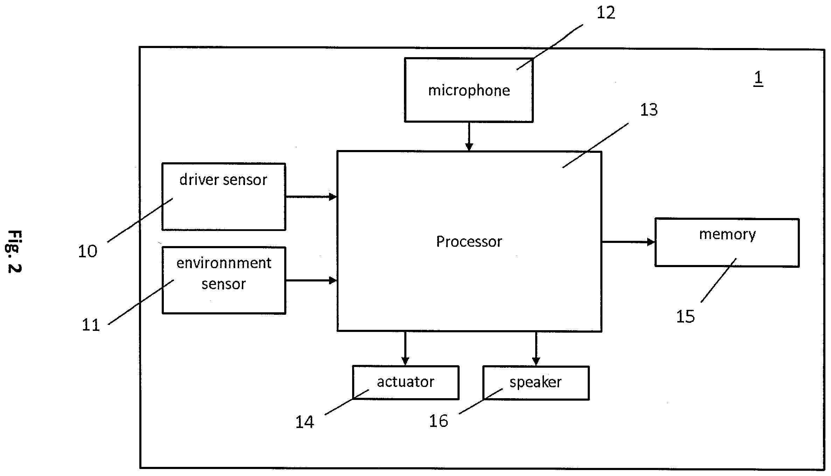

The system will monitor the driver and determine from this observation on which aspect or which area of a traffic scene the driver is currently focused. Thus, the system is capable of determining which part of a traffic scene is considered by the driver before he makes a decision how to proceed driving. In the present case it is, for example, determined that the driver looks into the direction of the second area 8 and he has delegated the observation of the part of the traffic scene in the area 7 to the system. When the system then outputs that entering the intersection is possible, because the system cannot identify a traffic object in the area 7, and the driver did still not perceive the traffic in the area 7, this area is determined to be a relevant area and the brakes of the vehicle 1 are activated by a signal that is generated by the processor of the system. It is to be noted that the structure of the system will be described with reference to Fig. 2.

The signal causing the activation of the brakes is maintained as long as the vehicle driver does not pay attention to the area 7. The area 7 is the relevant area which means an area that is considered to be necessary to be observed by the driver so that he can correctly asses the traffic situation, but where the driver did not yet pay attention. Thus, as long as the driver only looks into the direction of the second area 8, the signal causing the brakes to be activated will be maintained.

The driver's head and eye movements are permanently observed. From this information it is determined which part of the traffic scene the driver has actually observed. Thus, when the driver turns his head and looks into the direction of the relevant area 7, the system will recognize that the part of the traffic scene in the relevant area 7 is perceived by the driver. Thus, now the driver has all the information necessary to make a proper judgement of the traffic situation and the signal is reset and thus the brakes are released. The driver may now start his turning movement and follow the trajectory to enter lane 2.1.

It is to be noted that in the present case only the area 7 is determined to be the relevant area, because the second area 8 is assumed to be perceived by the driver anyway. But of course, the invention may be applied also in case that a plurality of relevant areas can be determined by the system. This could be, for example, the case when the vehicle 1 approaches an intersection and it is determined that the driver only focuses, for example, on a person standing on the other side of the road and thus he does not pay enough attention to the area 7 but also not to the second area 8.

When the brakes area released this is performed for a duration which advantageously is approximately 2 seconds. This time interval can be adapted such that the driver can perceive and judge the traffic situation in the relevant area. It is, for example, possible to adapt the time duration to complexity of the traffic situation, for example, a number of lanes of the intersection.

With the present invention it is avoided that the driver can enter an intersection without previously paying attention to all areas which need to be observed by the driver in order to make proper situation analysis. Thus, even in case that the driver is assisted by a system which may provide information if entering an intersection is possible or not, the driver cannot rely only on the system's judgement. Thus, the main purpose of the system is not to inform the driver of opportunities to make such a turn but rather inform him about a situation where there are no opportunities. The driver will know that he can continue observing the region of the traffic he decided to monitor himself, in the present case the second area 8, when the system informs him that there are no opportunities to make the turn. Only when the system informs him that there might be an opportunity to make the turn he will start monitoring the area 7 monitored by the system and then decide if he should make the turn. There are a plurality of different possibilities to decide when the brakes are activated. In one embodiment, for example, the system might activate the brakes only after the system announced the opportunity to make the turn which means that the evaluation of the area 7 done by the system results in informing the driver of a sufficiently large gap. This has the advantage that in a case where the system considers the gap not to be sufficient the brakes are not activated and thus the driver may quickly use a short gap. This can be done because in case that without positive confirmation from the system that there exists a sufficiently large gap, it can be assumed that the driver himself decided that he can safely enter the lane. Alternatively the brakes can already be activated when the vehicle driver stops at an intersection.

It is also possible to store driver profiles in a memory of the system, so that for different drivers individual timings can be applied. The timing may include the point in time when the brakes are activated but also the duration of releasing the brakes after it is determined that the driver perceived the part of the traffic in the relevant area. Activating the brakes may also be performed only when the driver is about to enter the intersection before he perceived the part of the traffic in the relevant area. Thus, until the driver in fact starts entering the intersection the vehicle 1 will still be movable. This allows, for example, to execute small and slow movements at the intersection which enable the driver to reposition himself at the intersection to improve his visibility to the intersection. But when the system recognizes, for example, by observation of the controls of the vehicle, that the driver now is starting to enter the intersection the brakes might be locked in case that the relevant area was not observed by the driver.

The profile may also store information on driver specific gaze patterns. Using such specific gaze patterns help to reliably identify what the driver has perceived.

In order to make the driver feel comfortable with the present system, the timing of the system is important. In particular, releasing the brakes should be done with proper timing. In order to do so the head and eye movements of the driver are used to predict when the complete motion of the driver's head is completed. Using this prediction allows to estimate when the driver will start entering the intersection. Thus, based on such an estimation it is possible to timely release the brakes so that the driver may start driving again without delay. This avoids that the driver might be annoyed or that even a dangerous situation is caused, because he starts entering the intersection later than expected. For predicting the movement and the perception time the system is able to predict the driver's gazing behavior before it is finished.

Furthermore, the system is capable of distinguishing between perception of the part of the traffic scene and only glancing at this area without perceiving it. Thus, it is avoided that the brakes are released in case that the driver by chance looks into the direction of the relevant area but does not cognitively perceive the vehicle's or traffic participant's presence. The system is thus able to infer from the drivers head and eye movements if he really perceived the part of the traffic scene in the relevant area. This is done by observing the drivers gazing patterns in relation to the objects present. The present objects can be detected when the system comprises environment sensors like cameras, radar sensors or lidar sensors. Of course, in a simpler embodiment the judgement will be performed only based on the eye movements and/or head movements of the driver without distinguishing whether the driver in fact perceived the traffic objects. In such a simple system the system may also only detect that the driver has stopped at the intersection, for example and as mentioned above on the basis of map information and a GPS system, determine that he wants to cross the intersection or make a turning movement which will affect lanes the driver has not recently monitored. These lanes correspond to the areas that need to be observed by the driver and each area that has not recently been monitored or the part of the traffic scene within this area was not determined to be perceived by the driver are determined to be relevant areas. Consequently, the system will also prevent the driver from entering these areas without checking them first. The system might use different cues to infer the intention of the driver. For example, information from the navigation system may be used as explained above but also previous driving behavior, current state of the driver and the vehicle and so on.

Up to now a preferred embodiment of the present invention was explained. In such preferred embodiment, based on the signal which is generated by the system, the brakes are activated and released in order to prevent the driver from entering an intersection or any other area of a road without perceiving a part of the traffic scene in a relevant area. This is the most intrusive embodiment which of course at the same time has the highest safety benefit. But it might be considered that the signal is used in order to generate a warning that is output to the driver and that, for example, reminds him of paying attention to the relevant area he did not observe yet. Such warning could be output by a spoken advice to properly monitor the relevant area (for example, "watch out for traffic at the right side") or outputting an acoustic signal like a beep-sound or the like.

Fig. 2 shows a block diagram of the vehicle 1. The vehicle 1 comprises a plurality of sensors like a driver sensor 10 used for monitoring the driver. The driver sensor 10 may comprise, for example, an eye tracker and a camera for determining head movements of the driver. In addition, the vehicle 1 may comprise environment sensors 11. Again, such environment sensor may comprise a camera. Additional sensors may be used. As explained above, in a simpler embodiment of the present invention the environment of the vehicle 1 is not observed by a camera, radar sensor, leader sensor or the like. In that case the environment sensor is only a GPS system for identifying a current position of the vehicle 1 that allows to determine whether the vehicle 1 currently approaches an intersection.

The system also in a preferred embodiment comprises a microphone 12 in order to receive a spoken instruction from a driver. Based on such spoken instruction the observation of a specific area in the environment of the vehicle 1 may be delegated to the system. Such delegation of observation tasks in specific areas is known already from the prior art, for example EP 3 235 701 A1 and thus a detailed description thereof is omitted.

The signals from the driver sensors 10, the environment sensors 11 and the microphone 12 are supplied to a processor 13. In the processor 13, the calculation of a signal to be output is performed based on the input signals and also on information stored in memory 15. Information stored in the memory 15 may be, for example, a profile of a driver so that individual timing of brake activation can be performed. The signal that is generated in the processor 13 is then output to an actuator 14, in the preferred embodiment the brake system of the vehicle 1. But as mentioned above, this could also be a warning lamp, speech output or alarm signal, or output by a speaker 16 based on the signal generated in the processor 13.

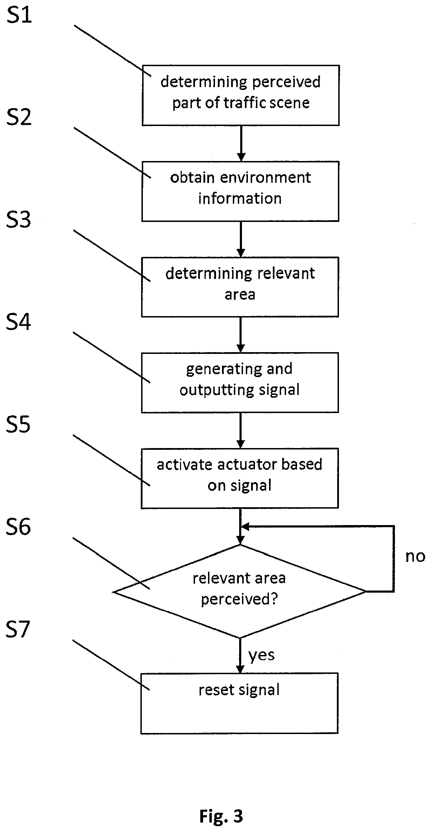

FIG. 3 shows a simplified flow chart of the inventive method. In a first step S1 the system determines which part of a traffic scene is perceived by the driver. This determination is done by an evaluation of the signals received from the driver sensor(s) 10. Furthermore, based on the environment sensor(s) 11 output information on the environment of the vehicle 1 is obtained in step S2. In step S3 an area of the environment of the vehicle that is a relevant are is determined in S3. For determining this relevant area the intention of the driver is estimated, so that at least a rough future trajectory for the vehicle 1 is determined. Then, in step S4 a signal is generated and output by the microprocessor 3. The signal is provided to an actuator 14 which in step S5 is activated based on the output signal. In the preferred embodiment the actuator 14 is the brake system of the vehicle which is activated based on the output signal.

In step S6 it is determined whether the driver perceived the part of the traffic in the relevant area. If the driver in fact perceived the traffic in the relevant area, the signal is reset in step S7 and thus the brakes are released.

If on the other hand it is determined that the driver did not perceive the part of the traffic in the relevant area, the signal is maintained and thus the brakes remain locked. In case that only a warning signal is output or a warning information is provided to the driver it might be considered that only when the output signal is generated the warning is output or that it is repetitively output in fixed time intervals as long as the signal is not reset.

The explanation was made based on the example of turning left at an intersection, but it is evident that it may be adapted to other situations, in particular other driving directions at an intersection. Furthermore, the system may be adapted to left-hand driving.

## Claims

1. Method for assisting a driver in driving a vehicle, comprising the steps of:
- determining which part of a traffic scene is perceived by the driver (S1),
- obtaining information on an environment of the vehicle (S2),
- determining an area (7) of the environment of the vehicle (1) that is relevant for judging if a future trajectory may be used safely (S3) and
- generating and outputting a signal (S4) based on which a warning is output to the driver or based on which the vehicle (1) is prevented to move further (S5) until the part of the traffic scene that is perceived by the driver can be determined to cover the traffic in the relevant area (7; S8, S9),
**characterized in that**
the relevant area (7) is determined based on an attention delegation task defining an aspect of a traffic scene to be observed by sensors (11) of the vehicle's driver assistance system, and that
based on the attention delegation task the obtained environment information is evaluated and information on a result of such evaluation is output.

2. Method according to claim 1,
**characterized in that**
a driver's intention to cross an intersection (2) or one or a plurality of lanes of an intersection is determined.

3. Method according to claim 1 or 2,
**characterized in that**
the signal causes the brakes of the vehicle to be activated (S5) when the vehicle (1) stops at an intersection (2) and to release the brakes when the driver perceived the traffic scene in the relevant area (7).

4. Method according to claim 3,
**characterized in that**
the brakes are released for a duration that is adapted to allow perception of the part of the traffic scene in the relevant area (7), take a decision and start the intended movement.

5. Method according to any one of claims 1 to 4, **characterized in that** the attention delegation task is determined based on a spoken instruction of the driver and **in that** it is determined whether the driver perceives the traffic scene based on the driver's focus in said traffic scene determined on the basis of the driver's traffic observation or perception that is monitored.

6. Method according to claim 5,
**characterized in that**
the brakes are activated only in case that the output information comprises a confirmation that the driver can safely execute his intended driving maneuver.

7. Method according to claim 6,
**characterized in that**
the brakes are released for a duration that is adapted to allow perception of the part of the traffic scene in the relevant area (7), take a decision and start the intended movement.

8. Method according to any one of claims 1 to 5,
**characterized in that**
based on a glancing behavior of the driver it is distinguished between perception of a part of the traffic scene and glancing at this area without perceiving it.

9. Method according to claim 8,
**characterized in that**
distinguishing between perception of a part of the traffic scene and glancing at this area without perceiving it includes analysis of the driver's eye gaze and/or the driver's head motion and any partial movement of the two.

10. Method according to claim 9,
**characterized in that**
a prediction of when the motion of the driver's head will be completed is performed in order to timely release the brakes of the vehicle.

11. Method according to any one of claims 1 to 10,
**characterized in that**
the timing and/or time duration of the signal output is adapted to an individual driver.

12. Driver assistance system comprising sensors (10, 11) for observing a driver and information on an environment of the vehicle (1) and a processor (13) configured to perform the method according to any one of claims 1 to 11 based on the driver observation and information on the environment.

13. Vehicle on which a driver assistance system according to claim 12 is mounted.

## Patentansprüche

1. Verfahren zur Unterstützung des Fahrers beim Führen eines Fahrzeugs, das die folgenden Schritte umfasst:
- Bestimmung, welcher Teil einer Verkehrsszene vom Fahrer wahrgenommen wird (S₁),
- Beschaffung von Informationen über die Umgebung des Fahrzeugs (S2),
- Bestimmen eines Bereichs (7) der Umgebung des Fahrzeugs (1), der relevant ist, um zu beurteilen, ob eine zukünftige Trajektorie sicher genutzt werden kann (S3), und
- Erzeugen und Ausgeben eines Signals (S4), auf dessen Grundlage eine Warnung an den Fahrer ausgegeben wird oder auf dessen Grundlage das Fahrzeug (1) an der Weiterfahrt gehindert wird (S5), bis für den vom Fahrer wahrgenommenen Teil der Verkehrsszene bestimmt werden kann, dass er den Verkehr in dem betreffenden Bereich abdeckt (7; S8, S9),
**dadurch gekennzeichnet, dass**
der relevante Bereich (7) auf der Grundlage einer Aufmerksamkeitsdelegationsaufgabe bestimmt wird, die einen Aspekt einer Verkehrsszene definiert, der von Sensoren (11) des Fahrerassistenzsystems des Fahrzeugs zu beobachten ist, und dass
auf der Grundlage der Aufmerksamkeitsdelegationsaufgabe die erhaltenen Umgebungsinformationen ausgewertet und Informationen über ein Ergebnis dieser Auswertung ausgegeben werden.

2. Verfahren nach Anspruch 1,
**dadurch gekennzeichnet, dass**
die Absicht eines Fahrers, eine Kreuzung (2) oder eine oder mehrere Fahrspuren einer Kreuzung zu überqueren, ermittelt wird.

3. Verfahren nach Anspruch 1 oder 2,
**dadurch gekennzeichnet, dass**
das Signal bewirkt, dass die Bremsen des Fahrzeugs aktiviert werden (S5), wenn das Fahrzeug (1) an einer Kreuzung (2) anhält, und dass die Bremsen gelöst werden, wenn der Fahrer die Verkehrsszene in dem betreffenden Bereich (7) wahrnimmt.

4. Verfahren nach Anspruch 3,
**dadurch gekennzeichnet, dass**
die Bremsen für eine Dauer gelöst werden, die so angepasst ist, dass der Teil der Verkehrsszene in dem betreffenden Bereich (7) wahrgenommen, eine Entscheidung getroffen und die beabsichtigte Bewegung eingeleitet werden kann.

5. Verfahren nach einem der Ansprüche 1 bis 4,
**dadurch gekennzeichnet, dass**
die Aufmerksamkeitsdelegationsaufgabe auf der Grundlage einer gesprochenen Anweisung des Fahrers bestimmt wird und dass auf der Grundlage der Konzentration des Fahrers auf die Verkehrsszene, auf der Grundlage der Verkehrsbeobachtung oder - wahrnehmung des Fahrers, die überwacht wird, bestimmt wird, ob der Fahrer die Verkehrsszene wahrnimmt.

6. Verfahren nach Anspruch 5,
**dadurch gekennzeichnet, dass**
die Bremsen nur dann aktiviert werden, wenn die ausgegebene Information eine Bestätigung enthält, dass der Fahrer sein beabsichtigtes Fahrmanöver sicher ausführen kann.

7. Verfahren nach Anspruch 6,
**dadurch gekennzeichnet, dass**
die Bremsen für eine Dauer gelöst werden, die so angepasst ist, dass der Teil der Verkehrsszene in dem betreffenden Bereich (7) wahrgenommen, eine Entscheidung getroffen und die beabsichtigte Bewegung eingeleitet werden kann.

8. Verfahren nach einem der Ansprüche 1 bis 5,
**dadurch gekennzeichnet, dass**
anhand des Blickverhaltens des Fahrers unterschieden wird zwischen der Wahrnehmung eines Teils der Verkehrsszene und dem Blick auf diesen Bereich, ohne ihn wahrzunehmen.

9. Verfahren nach Anspruch 8,
**dadurch gekennzeichnet, dass**
die Unterscheidung zwischen der Wahrnehmung eines Teils der Verkehrsszene und dem Blick auf diesen Bereich, ohne ihn wahrzunehmen, die Analyse des Blicks des Fahrers und/oder der Kopfbewegung des Fahrers und jeder Teilbewegung der beiden umfasst.

10. Verfahren nach Anspruch 9,
**dadurch gekennzeichnet, dass**
eine Vorhersage gemacht wird, wann die Bewegung des Kopfes des Fahrers abgeschlossen sein wird, um die Bremsen des Fahrzeugs rechtzeitig zu lösen.

11. Verfahren nach einem der Ansprüche 1 bis 10,
**dadurch gekennzeichnet, dass**
das Timing und/oder die Zeitdauer der Signalausgabe an einen einzelnen Fahrer angepasst wird.

12. . Fahrerassistenzsystem mit Sensoren (10, 11) zur Beobachtung eines Fahrers und Informationen über eine Umgebung des Fahrzeugs (1) und einem Prozessor (13), der so konfiguriert ist, dass er das Verfahren nach einem der Ansprüche 1 bis 11 auf der Grundlage der Fahrerbeobachtung und der Informationen über die Umgebung durchführt.

13. . Fahrzeug, in das ein Fahrerassistenzsystem nach Anspruch 12 eingebaut ist.

## Revendications

1. Procédé pour l'assistance d'un conducteur à la conduite d'un véhicule, comprenant les étapes suivantes :
- la détermination de quelle partie d'une scène de trafic est perçue par le conducteur (S1),
- l'obtention d'une information sur un environnement du véhicule (S2),
- la détermination d'une zone (7) de l'environnement du véhicule (1) qui est concernée pour juger si une trajectoire future peut être utilisée en sécurité (S3) et
- la génération et la sortie d'un signal (S4) sur la base duquel un avertissement est délivré en sortie au conducteur ou sur la base duquel le véhicule (1) est empêché de se déplacer davantage (S5) jusqu'à ce que la partie de la scène de trafic qui est perçue par le conducteur puisse être déterminée comme couvrant le trafic dans la zone concernée (7 ; S8, S9),
**caractérisé en ce que**
la zone concernée (7) est déterminée sur la base d'une tâche de délégation d'attention définissant un aspect d'une scène de trafic devant être observée par des capteurs (11) du système d'assistance au conducteur du véhicule, et **en ce que**
sur la base de la tâche de délégation d'attention, l'information d'environnement obtenue est évaluée et une information sur un résultat d'une telle évaluation est délivrée en sortie.

2. Procédé selon la revendication 1,
**caractérisé en ce que**
le souhait d'un conducteur de traverser une intersection (2) ou l'une ou une pluralité de voies d'une intersection est déterminé.

3. Procédé selon la revendication 1 ou 2,
**caractérisé en ce que**
le signal amène les freins du véhicule à être activés (S5) lorsque le véhicule (1) s'arrête à une intersection (2) et à relâcher les freins lorsque le conducteur a perçu la scène de trafic dans la zone concernée (7).

4. Procédé selon la revendication 3,
**caractérisé en ce que**
les freins sont relâchés pendant une durée qui est adaptée pour permettre la perception de la partie de la scène de trafic dans la zone concernée (7), de prendre une décision et de débuter le mouvement souhaité.

5. Procédé selon l'une quelconque des revendications 1 à 4,
**caractérisé en ce que**
la tâche de délégation d'attention est déterminée sur la base d'une instruction prononcée du conducteur et **en ce qu'**il est déterminé si le conducteur perçoit la scène de trafic sur la base de la concentration du conducteur sur ladite scène de trafic déterminée sur la base de l'observation ou de la perception de trafic du conducteur qui est surveillée.

6. Procédé selon la revendication 5,
**caractérisé en ce que**
les freins sont activés uniquement dans le cas où l'information délivrée en sortie comprend une confirmation que le conducteur peut exécuter en sécurité sa manœuvre de conduite souhaitée.

7. Procédé selon la revendication 6,
**caractérisé en ce que**
les freins sont relâchés pendant une durée qui est adaptée pour permettre la perception de la partie de la scène de trafic dans la zone concernée (7), de prendre une décision et de débuter le mouvement souhaité.

8. Procédé selon l'une quelconque des revendications 1 à 5,
**caractérisé en ce que**
sur la base d'un comportement de coup d'œil du conducteur, une distinction est faite entre une perception d'une partie de la scène de trafic et un coup d'œil vers cette zone sans la percevoir.

9. Procédé selon la revendication 8,
**caractérisé en ce que**
la distinction entre une perception d'une partie de la scène de trafic et un coup d'œil vers cette zone sans la percevoir comporte l'analyse du regard du conducteur et/ou du mouvement de la tête du conducteur et de tout mouvement partiel des deux.

10. Procédé selon la revendication 9,
**caractérisé en ce que**
une prédiction du moment auquel le mouvement de la tête du conducteur sera achevé est réalisée afin de relâcher au moment opportun les freins du véhicule.

11. Procédé selon l'une quelconque des revendications 1 à 10,
**caractérisé en ce que**
la temporisation et/ou la durée temporelle de la sortie de signal est adaptée à un conducteur individuel.

12. Système d'assistance au conducteur comprenant des capteurs (10, 11) afin d'observer un conducteur et une information sur un environnement du véhicule (1) et un processeur (13) configuré pour réaliser le procédé selon l'une quelconque des revendications 1 à 11 sur la base de l'observation du conducteur et de l'information sur l'environnement.

13. Véhicule sur lequel un système d'assistance au conducteur selon la revendication 12 est monté.
